(19) Europäisches Patentamt
European Patent Office
Office européen des brevets

(11) **EP 4 525 475 A1**

(12) **EUROPEAN PATENT APPLICATION**

(43) Date of publication:
**19.03.2025 Bulletin 2025/12**

(21) Application number: **24194896.7**

(22) Date of filing: **16.08.2024**

(51) International Patent Classification (IPC):
**H04N 23/663** (2023.01)    **G03B 17/14** (2021.01)
**H04N 23/667** (2023.01)

(52) Cooperative Patent Classification (CPC):
**H04N 23/663; G03B 17/14; H04N 23/667;**
G03B 3/00; G03B 9/00; H04N 23/55

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.09.2023 JP 2023147575**

(71) Applicant: **CANON KABUSHIKI KAISHA**
**Tokyo 146-8501 (JP)**

(72) Inventors:
• **SEKI, Takashi**
**Tokyo, 146-8501 (JP)**
• **YOSHIKAWA, Akio**
**Tokyo, 146-8501 (JP)**

(74) Representative: **TBK**
**Bavariaring 4-6**
**80336 München (DE)**

(54) **IMAGE CAPTURING APPARATUS, CONTROL METHOD, AND PROGRAM PRODUCT**

(57)    An image capturing apparatus includes a lens unit (200), a camera body (100), first and second controllers (205, 50) that control a setting value by a lens side and a camera side. The second controller (50) controls the setting value and stores as a second setting value. In an integrated configuration in which an operation member (208) and a control source changeover unit (207) are integrated in the lens unit, when a control source is switched to the camera body, the second controller controls the second setting value, and the camera body notifies the lens unit of being the control source. In a separate configuration, when the control source is switched to the camera body, the second controller updates the second setting value with a first setting value controlled by the first controller.

*FIG. 3A*

EP 4 525 475 A1

# FIG. 3B

**Description**

BACKGROUND

Technical Field

One disclosed aspect of the embodiments relates to an image capturing apparatus, a control method therefor, and a storage medium storing a control program therefor.

Description of the Related Art

There is a known camera constituted by a lens unit and a camera body to which the lens unit is attachable that allows to set (control) an aperture value by a lens side (lens unit side) and a camera side (camera body side). For example, as a configuration of changing over whether an aperture value is controlled by the lens side or the camera side, there is an integrated type lens unit that has a diaphragm operation ring of which an operatable region includes a lens-side control region for setting the aperture value by the lens side and a camera-side control region for setting the aperture value by the camera side provided outside the lens-side control region. In the integrated type lens, a control source that controls the aperture value is switched between the camera side and the lens side according to the operation of the diaphragm operation ring.

In addition, as another configuration, there is a separate type lens unit in which a diaphragm operation ring for setting an aperture value by the lens side is separated from a control source changeover switch for changing over the control source. Japanese Patent Laid-Open Publication No. 2021-076807 discloses a technique for clearly notifying a user of whether the aperture value is controlled by the lens side or the camera side.

The camera-side control region in the integrated type lens unit is provided outside the lens-side control region, i.e., at a position beyond the maximum aperture value or the minimum aperture value. Therefore, when a user operates the diaphragm operation ring to switch the control source to the camera side in using the conventional integrated type lens unit, the aperture value is once controlled to the minimum value or the maximum value. Although the technique disclosed in the above-mentioned publication allows easy determination of the control source, the above circumstance requires to reset the aperture value when the user changes over the control source to the camera side. Therefore, the user has to spend time and effort in changing over the control source.

SUMMARY

Accordingly, a first aspect of the embodiments provides an image capturing apparatus as specified in claims 1 to 10.

Accordingly, a second aspect of the embodiments provides a control method for an image capturing apparatus as specified in claim 11.

Accordingly, a third aspect of the embodiments provides a program product as specified in claim 12.

Further features of the disclosure will become apparent from the following description of exemplary embodiments with reference to the attached drawings.

BRIEF DESCRIPTION OF THE DRAWINGS

FIGS. 1A and 1B are external configuration views showing a camera according to an embodiment.
FIG. 2 is a block diagram showing internal configurations of the camera and a lens unit.
FIGS. 3A and 3B are external construction views respectively showing an integrated type lens unit and a separate type lens unit.
FIG. 4 is an explanation view showing a live view image example of the camera.
FIGS. 5A and 5B are flowcharts showing a processing of a first embodiment.
FIGS. 6A and 6B are flowcharts showing a process of a second embodiment.
FIGS. 7A and 7B are flowcharts showing a process of a partially alternative example of the second embodiment.

DESCRIPTION OF THE EMBODIMENTS

Hereafter, embodiments according to the present invention will be described in detail by referring to the drawings. However, configurations described in the following embodiments are merely examples, and the scope of the present invention is not limited by the configurations described in the embodiments. In this embodiment, a digital camera configured by attaching a detachable lens unit to a camera body will be described as an example of an image capturing apparatus. Hereinafter, the camera body side is also referred to as a camera side.

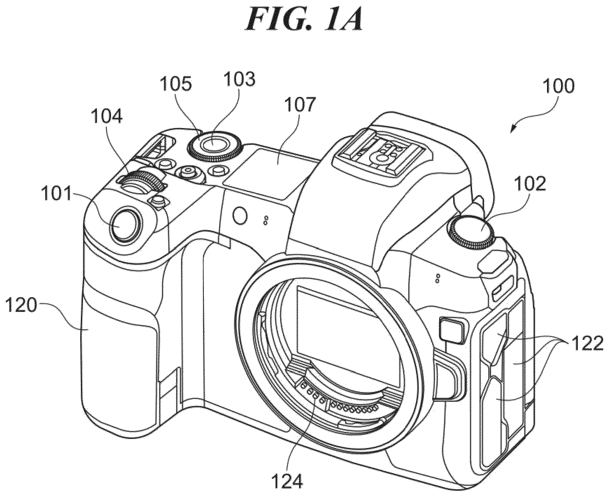

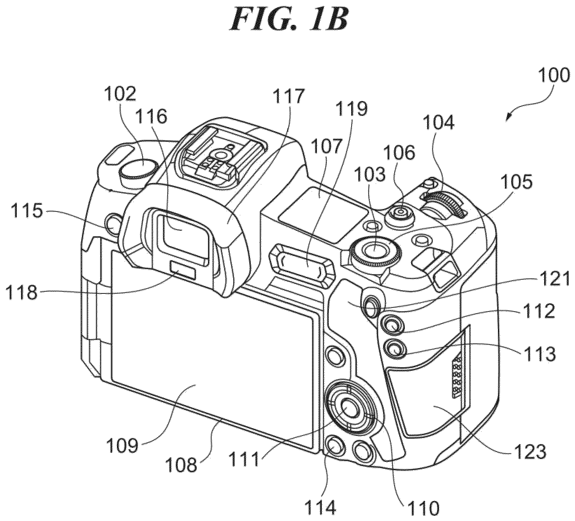

FIGS. 1A and 1B are external configuration views showing examples of an external configuration of the digital camera body 100 (hereinafter simply referred to as a camera). FIG. 1A is a perspective view of the camera 100 as viewed from a front side, and FIG. 1B is a perspective view of the camera 100 as viewed from a back side.

On an upper face of the camera 100, a shutter button 101, a power switch 102, a mode changeover switch 103, a main electric dial 104, a sub electronic dial 105, a moving image button 106, and an upper-face display unit 107 that is an out-of-finder display unit are provided.

The shutter button 101 is an operation member for instructing an image capturing preparation and an image capturing operation. The power switch 102 is an operation member for switching the power of the camera 100 between ON and OFF. The mode changeover switch 103 is an operation member for switching various modes. The main electric dial 104 is a rotary operation member for changing image capturing setting values, such as a shutter speed and an aperture value. The sub electronic dial 105 is a rotary operation member for moving a selection frame (a cursor), feeding a content clip in a still image or a moving image, etc. The moving image button 106 is an operation member for giving an instruction to start or stop moving image capturing (recording). The upper-face display unit 107 is a small display unit that displays various settings, such as a shutter speed and an aperture value.

Further, on the back face of the camera 100, a back-face display unit 108, a touch panel 109, a four-direction key 110, a SET button 111, an AE lock button 112, an enlargement button 113, a reproduction button 114, and a menu button 115 are provided. Further, on the back face of the camera 100, an eyepiece window 116, an eyepiece finder 117, an eye contact detector 118, and a touch bar 119 are provided.

The back-face display unit 108 displays images and various types of information. The touch panel 109 detects a touch operation on a display surface (touch operation surface) of the back-face display unit 108, and the back-face display unit 108 and the touch panel 109 are used in common. The four-direction key 110 is an operation member that can be pressed in up, down, left, and right directions. The four-direction key 110 is configured to instruct an operation corresponding to the pressed direction.

The SET button 111 is an operation member that is pressed mainly to determine a selection item. The AE lock button 112 is an operation member that is pressed to fix an exposure state in an image capturing standby state. The enlargement button 113 is an operation member for switching ON and OFF of an enlargement mode of live view display (LV display) in an image capturing mode. When the enlargement mode is ON, a live view image (LV image) is enlarged or reduced by operating the main electric dial 104. The enlargement button 113 is also used to enlarge an image or increase an enlargement ratio in a reproduction mode. The reproduction button 114 is an operation member for switching a mode between the image capturing mode and the reproduction mode. When the user presses the reproduction button 114 in the image capturing mode, the mode shifts to the reproduction mode and the latest image among clips recorded in a storage medium 227 mentioned later is displayed on the back-face display unit 108.

The menu button 115 is an operation member that is pressed to display a menu screen on which various settings are possible on the back-face display unit 108. The user can intuitively perform various settings by operating the four-direction key 110 and the SET button 111 while viewing the menu screen displayed on the back-face display unit 108. The eyepiece window 116 is a part of the eyepiece finder (a look-in finder) 117. The user can visually recognize an image displayed on an internal EVF (electronic view finder) 217 through the eyepiece window 116.

The eye contact detector 118 is a sensor that detects whether the user is looking into the eyepiece window 116. The touch bar 119 is a linear touch operation member (a line touch sensor) capable of sensing a touch operation. The touch bar 119 is arranged at a position where a touch operation can be performed by a thumb of a right hand in a state where the grip 120 is held by a little finger, a ring finger, and a middle finger of the right hand so that the shutter button 101 can be pressed by an index finger of the right hand.

That is, the touch bar 119 can be operated in a state (an image capturing posture) in which the four-direction key 110 can be pressed while the user brings an eye close to the eyepiece window 116 and is looking into the eyepiece finder 117. The touch bar 119 is configured to be able to accept a tap operation (an operation of touching and releasing within a predetermined period without moving a touch position), a slide operation to left or right (an operation of touching and moving a touch position without releasing a finger), etc. The touch bar 119 is an operation member separated from the touch panel 109 and does not have a display function. The touch bar 119 of this embodiment functions as a multifunction bar.

The grip 120 of the camera 100 is also provided with a thumb rest portion 121, a terminal cover 122, a lid 123, a communication terminal 124, etc. The grip 120 is a grip portion formed in a shape that is easy for the user to grip with the right hand in holding the camera 100. The main electric dial 104 is arranged at a position that allows an operation by the index finger of the right hand in a state where the camera 100 is held by gripping the grip 120 with the little finger, the ring finger, and the middle finger of the right hand. In addition, the sub electronic dial 105 and the touch bar 119 are arranged at positions that allow an operation by the thumb of the right hand in the same state.

The thumb rest portion 121 (a thumb standby position) is provided at a position on the back side of the camera 100 where the thumb of the right hand gripping the grip 120 can be easily placed in a state where no operation member is operated. The thumb rest portion 121 is formed of a rubber member or the like in order to increase a holding force (grip feeling). The terminal cover 122 protects a connector (not shown) of a connection cable connecting the camera 100 to an external apparatus. The lid 123 protects the storage medium 227 and a slot by closing the slot housing the storage medium 227 described later. The communication terminal 124 is used to communicate with a lens unit 200 described later that can be attached to and detached from the camera 100.

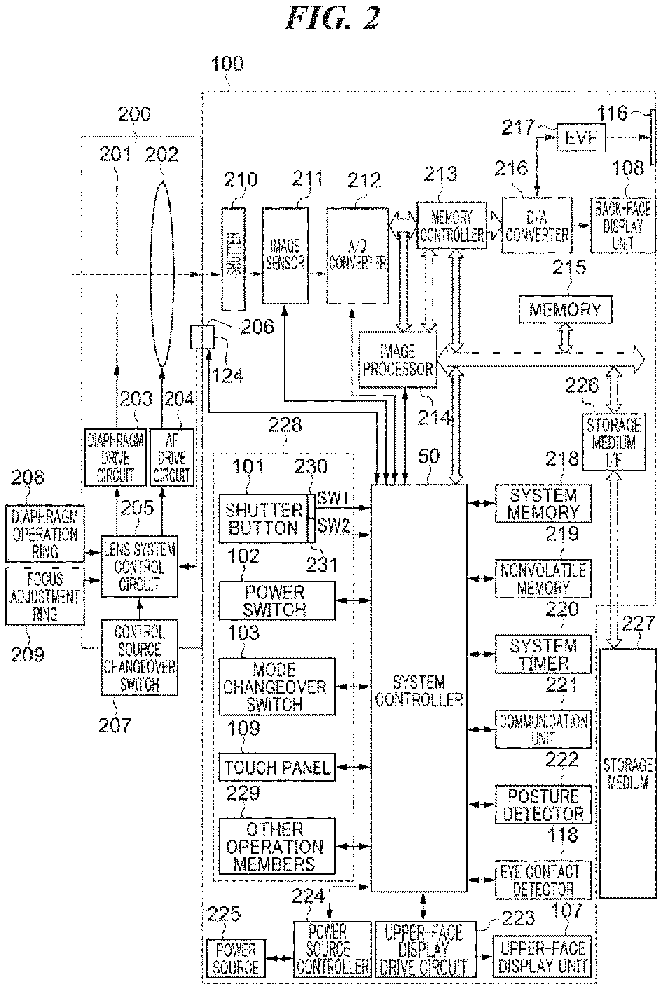

FIG. 2 is a block diagram showing internal configurations of the camera 100 and the lens unit 200. The components shown in FIG. 1A and FIG. 1B are denoted by the same reference numerals in FIG. 2 and duplicated descriptions will be omitted as much as possible. As shown in FIG. 2, the lens unit 200 is mounted on the front side of the camera 100. The lens unit 200 (lens) is a type of interchangeable lens unit that can be attached to and detached from the camera 100 (body). First, the configuration of the lens unit 200 will be described.

The lens unit 200 includes a diaphragm 201, a lens system 202, a diaphragm drive circuit 203, an AF (autofocus) drive circuit 204, a lens system control circuit 205, and a communication terminal 206. An opening diameter of the diaphragm 201 can be controlled. The lens system 202 is constituted of a plurality of lens groups. The diaphragm drive circuit 203 adjusts a light amount by controlling the opening diameter of the diaphragm 201. The AF drive circuit 204 moves a lens group included in the lens system 202 in a horizontal direction in FIG. 2 to focus on an object. The lens system control circuit 205 controls the diaphragm drive circuit 203 and the AF drive circuit 204. The lens system control circuit 205 controls the diaphragm 201 by drivingly controlling the diaphragm drive circuit 203, and moves the lens group included in the lens system 202 by drivingly controlling the AF drive circuit 204 to focus on the object. The lens system control circuit 205 can communicate with the camera 100.

The lens system control circuit 205 is also able to communicate with a diaphragm operation ring 208 as the rotating operation member and a focus adjustment ring 209. The diaphragm operation ring 208 is used for adjusting the aperture value by the lens side by a user's rotating operation, and the focus adjustment ring 209 is used for adjusting the focus by a user's rotating operation. The lens system control circuit 205 controls the diaphragm drive circuit 203 and the AF drive circuit 204 based on instructions from either lens setting operation members (208 and 209) or a system controller 50 described later. A control source changeover switch (control source changeover unit) 207 connected to the lens system control circuit 205 is used to change over a control source. When the control source changeover switch 207 indicates a camera side, the control source becomes the camera side. When the control source changeover switch 1001 indicates a lens side, the control source becomes the lens side. Communication between the camera 100 and the lens unit 200 is performed by connecting the communication terminal 124 of the camera 100 with the communication terminal 206 of the lens unit 200.

Further, the lens unit 200 transmits information including lens identification information for discriminating lens information to the camera 100, and the camera 100 receives the information transmitted from the lens unit 200. The information includes lens type information indicating whether the diaphragm operation ring 208 (the lens setting operation member) and the control source changeover switch 207 are integrated.

The configuration of the camera 100 will now be described with reference to FIG. 2. The camera 100 includes a shutter 210, an image sensor 211, an A/D converter 212, a memory controller 213, an image processor 214, a memory 215, a D/A converter 216, the EVF 217, the back-face display unit 108, and the system controller 50. The shutter 210 is a focal plane shutter capable of freely controlling exposure time of the image sensor 211 based on an instruction from the system controller 50. The image sensor 211 is a CCD sensor, a CMOS sensor, or the like that converts an optical image of an object into an electric signal. The image sensor has photoelectric conversion elements for respective pixels arranged in a matrix. The image sensor 211 may include an image-plane phase difference sensor that outputs information about a defocus amount to the system controller 50. The A/D converter 212 converts an analog signal output from the image sensor 211 into a digital signal.

The image processor 214 applies predetermined image processes to the data output from the A/D converter 212 or the data output from the memory controller 213. The predetermined image processes include, for example, a pixel interpolation process, a resizing processing such as image reduction, a color conversion process, and the like. The image processor 214 performs a predetermined calculation process using captured image data. The system controller 50 executes exposure control, distance measurement control, and the like based on the result of the predetermined calculation process. In addition, the image processor 214 executes a TTL (through-the-lens) AF process, an AE (automatic exposure) process, an EF (a flash pre-emission) process, etc. Further, the image processor 214 performs a predetermined calculation process using the captured image data, and executes an AWB (automatic white balance) process by the TTL method based on the obtained calculation result.

The image data output from the A/D converter 212 is written to the memory 215 via the image processor 214 and the memory controller 213. Alternatively, the image data output from the A/D converter 212 is directly written to the memory 215 via the memory controller 213 without passing through the image processor 214. The memory 215 stores still image data and moving image data obtained by the image sensor 211 and converted into digital data by the A/D converter 212, and also stores image data to be displayed on the back-face display unit 108, the EVF 217, etc. The memory 215 has a storage capacity sufficient to store the predetermined number of still images, the predetermined time period of moving images, and audio data. The memory 215 also serves as a video memory for displaying an image.

The D/A converter 216 converts the image display date stored in the memory 215 into an analog signal and supplies the analog signal to the back-face display unit 108, the EVF 217, etc. Therefore, the image display date written in the memory 215 is displayed on the back-face display unit 108, the EVF 217, etc. via the D/A

**EP 4 525 475 A1**

converter 216. The back-face display unit 108 and the EVF 217 display images according to the analog signal output from the D/A converter 216. The back-face display unit 108 and the EVF 217 are LCDs or organic EL displays, for example. The digital signals that are analog-digital converted by the A/D converter 212 and stored in the memory 215 are converted into analog signals by the D/A converter 216, and are sequentially transferred to the back-face display unit 108, the EVF 217, etc. and are displayed. This enables live view display.

The system controller 50 includes one or more processors or one or more circuits. That is, the system controller 50 may be configured by a processor or may be configured by a circuit having the same function as the processor. Alternatively, the configuration may be a combination of a processor and a circuit. The system controller 50 controls the entire camera 100. The system controller 50 executes a program stored in a nonvolatile memory 219 to achieve processes of flowcharts described later. Further, the system controller 50 also executes display control by controlling the memory 215, the D/A converter 216, the back-face display unit 108, the EVF 217, etc. The processor may be a CPU, a DSP, or an MPU.

The camera 100 also includes a system memory 218, the nonvolatile memory 219, a system timer 220, a communication unit 221, a posture detector 222, and the eye contact detector 118, which are connected to be controllable by the system controller 50.

The system memory 218 is a RAM, for example. The system memory 218 stores constants, variables, etc. for the operation of the system controller 50, and also has an area on which a program read from the nonvolatile memory 219 is developed. The nonvolatile memory 219 is an electrically erasable and programable memory like an EEPROM. The nonvolatile memory 219 stores constants, programs, etc. for the operation of the system controller 50 in a nonvolatile manner. The system controller 50 reads a program stored in the nonvolatile memory 219, develops the program on the system memory 218, and executes the developed program, thereby executes processes in flowcharts described below.

The system timer 220 functions as a time measurement unit that performs various kinds of time measurement in the system memory 218 and time measurement in a built-in clock. The communication unit 221 transmits and receives information such as an image signal and an audio signal to and from an external apparatus connected wirelessly or by wire. The communication unit 221 can also be connected to a wireless LAN (local area network), the Internet, etc. The communication unit 221 can communicate necessary information with the external apparatus by the Bluetooth™, for example. The communication unit 221 can also communicate necessary information with the external apparatus by the Bluetooth Low Energy. The communication unit 221 can transmit an image (including a live image) captured by the image sensor 211 and an image recorded in the storage medium 227 mounted on the camera 100, and can also receive the image data and other various kinds of information from the external apparatus.

The posture detector 222 detects the posture of the camera 100 with respect to the gravity direction. An inclination angle of the camera 100 in the horizontal direction or the vertical direction can be detected based on the posture detected by the posture detector 222. Further, it is possible to determine whether the image captured by the image sensor 211 is an image captured by the user holding the camera 100 horizontally or vertically, based on the posture detected by the posture detector 222. The system controller 50 can add posture information corresponding to the posture detected by the posture detector 222 to an image file of an image captured by the image sensor 211, and can rotate and store the image. The system controller 50 can also detect a movement of the camera 100 (panning, tilting, lifting, being stationary, or the like) based on the signal from the posture detector 222. The posture detector 222 is constituted of, for example, one or more acceleration sensors, a gyrosensor, etc.

The eye contact detector 118 detects approach of an object to the eyepiece window 116 (see FIG. 1) of the eyepiece finder 117 that contains the EVF 217. The eye contact detector 118 is an eye contact detection sensor that detects contact (eye contact) and separation (eye separation) of an eye (object) with respect to the eyepiece window 116 of the eyepiece finder 117. The eye contact detector 118 may be an infrared contact sensor, for example. When an object approaches, infrared light projected from a light emitter of the eye contact detector 118 is reflected by the object and received by a light receiver of the infrared contact sensor. In addition, the distance from the eyepiece window 116 to the object can be determined by the amount of received infrared light. In this way, the eye contact detector 118 has an eye contact detection function of detecting that an object (eye) has approached when the distance to the object from the eyepiece window 116 is shortened. That is, the eye contact detector 118 detects the eye contact when the object (eye) approaching the eyepiece window 116 within a predetermined distance is detected in the eye non-contact state.

In the meantime, the eye contact detector 118 detects the eye separation when the object is separated from the eye piece window 166 more than the predetermined distance. The detection accuracy can be improved by, for example, providing hysteresis between a threshold for a received infrared light amount for detecting the eye contact and a threshold of a received infrared light amount for detecting the eye separation. After detecting the eye contact, the eye contact detector 118 determines that the eye is in the eye contact state until the eye separation is detected. After detecting the eye separation, the eye contact detector 118 determines that the eye is in the eye non-contact state until the eye contact is detected.

The system controller 50 switches a display state and a non-display state of the back-face display unit 108 and the EVF 217 according to the state detected by the eye contact detector 118. Specifically, when switching of a display destination is set to automatic at least in the image capturing standby state, the system controller 50 sets, in the eye non-contact state, the display destination to the back-face display unit 108, turns ON its display function, and turns OFF the display function of the EVF 217. Further, the system controller 50 sets, in the eye contact state, the display destination to the EVF 217, turns ON its display function, and turns OFF the display function of the back-face display unit 108. The eye contact detector 118 is not limited to the configuration using the infrared contact sensor, and another sensor capable of detecting the eye contact state may be used.

The camera 100 also includes the upper-face display unit 107, an upper-face display drive circuit 223, a power source controller 224, a power source 225, a storage medium I/F 226, and an operation unit 228, which are connected so as to be controllable by the system controller 50.

The system controller 50 controls the upper-face display drive circuit 223 to display various settings of the camera 100, such as a shutter speed and an aperture value, on the upper-face display unit 107. The power source controller 224 is constituted of a battery detection circuit, a DC-DC converter, a switch circuit for switching a block to be energized, etc., and detects attachment of a battery, the type of the battery, a remaining battery level. The power source controller 224 controls the DC-DC converter based on the detection result and the instruction from the system controller 50 to supply a necessary voltage to each section in the camera 100 including the storage medium 227 for a necessary period.

The power source 225 is constituted of a primary battery, such as an alkaline battery or a lithium battery, a secondary battery, such as a NiCd battery, a NiMH battery, or a Li battery, or an AC adapter. The storage medium I/F 226 is an interface with the storage medium 227. The storage medium 227 is a memory card, a USB memory, or a hard disk for recording a captured image, and is constituted by a semiconductor memory, a magnetic disk, or the like. The storage medium 227 is basically detachable from the camera 100, but may be configured to be always built in the camera 100.

The operation unit 228 is an input unit for accepting user operations and is also used for giving various instructions to the system controller 50. The operation unit 228 includes the shutter button 101, the power switch 102, the mode changeover switch 103, the touch panel 109, and other operation members 229, which are connected to the system controller 50. The other operation members 229 include the main electric dial 104, the sub electronic dial 105, the moving image button 106, the four-direction key 110, the SET button 111, the AE lock button 112, and the enlargement button 113 shown in FIG. 1B. The other operation members 229 include the reproduction button 114, the menu button 115, and the touch bar 119 shown in FIG. 1B.

The shutter button 101 operates a first shutter switch 230 and a second shutter switch 231. The first shutter switch 230 is turned ON in middle of a press operation of the shutter button 101, that is, by what is called a half-press (an image-capturing preparation instruction), and generates a first shutter switch signal SW1. The system controller 50 starts image-capturing preparation operations, such as an AF process, AE process, AWB process, and EF process, in response to the first shutter switch signal SW1. The second shutter switch 231 is turned ON by completion of the press operation of the shutter button 101, that is, by what is called a full press (an image capturing instruction), and generates a second shutter switch signal SW2. The system controller 50 starts a series of operations of the image capturing process from reading of a signal from the image sensor 211 to writing of a captured image as an image file in the storage medium 227 in response to the second shutter switch signal SW2. As mentioned above, the power switch 72 is an operation member for switching the power of the camera 100 between ON and OFF.

The mode changeover switch 103 switches the operation mode of the system controller 50 to any one of a still image capturing mode, a moving image capturing mode, and a reproduction mode. The still image capturing mode includes an auto capturing mode, an auto scene determination mode, a manual mode, an aperture priority mode (Av mode), a shutter speed priority mode (Tv mode), and a program AE mode (P mode). Further, there are various scene modes, which are image capturing settings for respective image capturing scenes, custom modes, etc. The user directly switches to any of these modes by operating the mode changeover switch 103. Alternatively, the user can change a screen to a list screen showing the image capturing modes by operating the mode changeover switch 60 and then can switch the mode to any one of the displayed modes by operating the operation unit 228. Similarly, the moving image capturing mode includes a plurality of modes.

The touch panel 109 is a touch sensor that detects various touch operations on the display surface of the back-face display unit 108 (the operation surface of the touch panel 109). The touch panel 109 and the back-face display unit 108 are integrally configured. For example, a light transmittance of the touch panel 109 is set so as not to disturb the display of the back-face display unit 108. The touch panel 109 is attached to an upper layer of the display surface of the display unit 108. Then, an input coordinate on the touch panel 109 and a display coordinate on the display surface of the back-face display unit 108 are associated with each other. This provides a GUI (graphical user interface) that can be operated as if the user can directly operate the screen displayed on the back-face display unit 108. When the camera side is the control source, the aperture value can be changed and controlled by operating the touch panel 109, the four-direction key 110, or the like.

The touch panel 109 may be any type of touch panel among various types of touch panels, such as a resistive film type, a capacitive type, a surface-acoustic-wave type, an infrared type, an electromagnetic-induction type, an image recognition type, and an optical sensor type. There are a method of detecting a touch by a contact with the touch panel and a method of detecting a touch by a contact of a finger or a pen to the touch panel, and any method may be used.

The system controller 50 can detect the following operations or states on the touch panel 109.

> (1) A finger or a pen that has not touched the touch panel 109 newly touches the touch panel 109. That is, the start of a touch (hereinafter referred to as "touch-down").
> (2) A finger or a pen keeps touching the touch panel 109 (hereinafter referred to as "touch-on").
> (3) A finger or a pen is moving while touching the touch panel 109 (hereinafter referred to as "touch-move").
> (4) A finger or a pen that has been touching the touch panel 109 is released from the touch panel 109. That is, the end of the touch (hereinafter referred to as "touch-up").
> (5) Nothing touches the touch panel 109 (hereinafter referred to as "touch-off").

When the touch-down is detected, the touch-on is also detected at the same time. After the touch-down, the touch-on is continuously detected generally unless the touch-up is detected. When the touch-move is detected, the touch-on is also detected at the same time. Even if the touch-on is detected, the touch-move is not detected unless the touch position is moving. When the touch-up of all the fingers or the pen that have been touching is detected, the touch-off is detected.

The system controller 50 is notified of these operations and states and the position coordinate of the touched position by the finger or the pen on the touch panel 109 via an internal bus. Then, the system controller 50 determines what kind of operation (touch operation) has been performed on the touch panel 109 based on the notified information. As for the touch-move, the moving direction of the finger or the pen moving on the touch panel 109 is also determined. That is, the system controller 50 determines a motion for each of a vertical component and a horizontal component on the touch panel 109 based on the change of the position coordinate of the touch position.

When detecting the touch move of a predetermined distance or more, the system controller 50 determines that a slide operation is performed. An operation of quickly moving a finger on the touch panel 109 by a certain distance while keeping the finger in contact with the touch panel and then releasing the finger is called a flick. In other words, the flick is an operation of quickly tracing the touch panel 109 with a finger as if flicking the touch panel. When the touch move of the predetermined distance or more at a predetermined speed or more is detected and the touch-up is detected after that, the system controller 50 determines that the flick has been performed. That is, it is determined that the flick is performed following the slide operation.

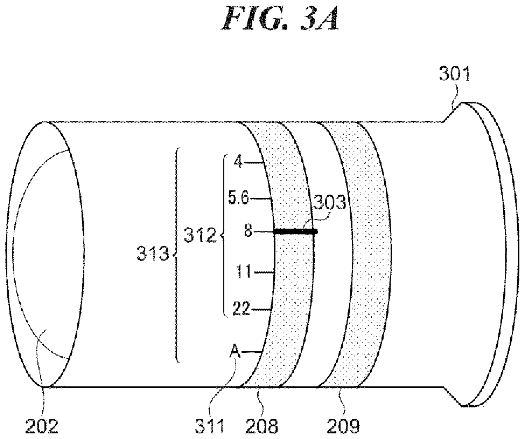

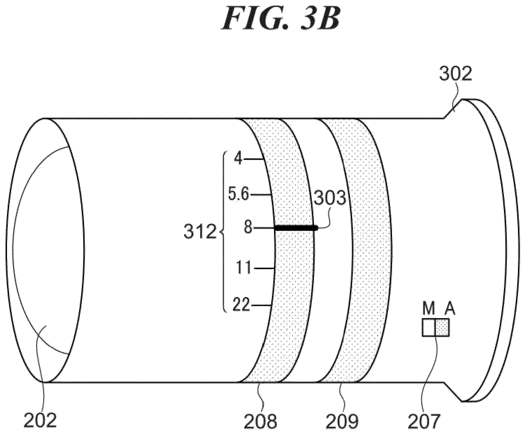

FIGS. 3A and 3B show lens units with control source changeover switches switching a control source of an aperture value between the lens side and the camera side. FIG. 3A shows an example of an integrated type lens unit 301.

The integrated type lens unit 301 includes the lens system 202, the diaphragm operation ring 208 as a lens setting operation member capable of changing an image capturing parameter, and the focus adjustment ring 209. The diaphragm operation ring 208 is disposed such that its rotation axis coincides with the optical axis of the lens system 202, and is configured such that the setting of the aperture value of the lens unit can be changed by a rotating operation by the user.

Further, in the integrated type lens unit 301, the control source changeover switch (the reference numeral 207 is not shown due to the integrated structure) is switched in conjunction with the rotating operation of the diaphragm operation ring 208. Specifically, a rotation range 313 of the diaphragm operation ring 208 includes a lens-side control region 312 on which F numbers are printed and a camera-side control region 311 (indicated by "A" in FIG. 3A) arranged at one end of the rotation range 313 outside the lens-side control region 312. When the diaphragm operation ring 208 is rotated to the lens-side control region 312 (an index 303 of the diaphragm operation ring 208 points to the lens-side control region 312), the control source becomes the lens side. When the diaphragm operation ring 208 is rotated to the camera-side control region 311 (the index 303 points to the camera-side control region 311), the control source becomes the camera side. The position of the index 303 is detected by a detection unit (not shown) configured using an encoder etc.

The above is summarized as follows. The camera-side control region 311 is arranged adjacent to the lens-side control region 312 in a rotating direction of the diaphragm operation ring 208. The control source is switched by the control source changeover switch 207 by the rotating operation of the diaphragm operation ring 208. For example, the control source is switched to the camera side when the user continues the rotating operation of the diaphragm operation ring 208 until the index 303 rushes into the camera-side control region 311 from the lens-side control region 312. Further, when the user performs the rotating operation of the diaphragm operation ring 208 in the reverse direction, the control source can be switched to the lens side. Then, when the index 303 points to the camera-side control region 311, the lens system control circuit 205 performs the aperture control in response to the instruction from the system controller 50.

When the index 303 points to the lens-side control region 312, the lens system control circuit 205 performs the aperture control with the aperture value ("8" in the case of FIG. 3A) pointed by the index 303 in accordance with the rotational position of the diaphragm operation ring 208. Thus, the aperture value control is performed by the lens side when the index 303 is in the lens-side control region 312, while the aperture value control is performed by the camera body side when the index 303 is in the camera-side control region 311.

Generally, the configuration in which the diaphragm operation ring 208 (an operation member) and the control source changeover switch 207 are integrated is, for example, the following configuration. The diaphragm operation ring 208 is configured by a rotating member provided in the lens unit 301of which a rotation axis coincides with the optical axis of the lens system 202. A part of the rotation range 313 is the lens-side control region 312 that is the region for changing and controlling the aperture value in accordance with the rotation. Another part of the rotation range 313 is the camera-side control region 311 arranged in a region extended from the lens-side control region 312 in the rotating direction. The control source changeover switch 207 is arranged in the lens unit 301 so as to switch the control source to the camera side when the index 303 points to the lens-side control region 312. Thus, the other part, which is the region extended from the lens-side control region 312 in the rotating direction, includes a changeover point of the control source changeover switch (control source changeover unit) 207. For example, as shown in FIG. 3A, the camera-side control region 311 is formed in a region extended f the lens-side control region 312 in the rotating direction of the diaphragm operation ring 208. In this case, the control areas 311 and 312 can be switched by the rotating operation of the diaphragm operation ring 208, and the control source is also switched in accordance with this switching. Thus, the diaphragm operation ring 208 and the control source changeover switch 207 are integrated.

Also, the information of the aperture value is transmitted to the system controller 50 via the communication terminal 206 and is visible on an OSD (on-screen display) superimposed on the live view image displayed on the upper-face display unit 107 and the back-face display unit 108. Further, the user can visually grasp the aperture value by seeing the numerals printed on the lens housing. The integrated type lens unit 301 preferably includes a mechanism to disturb an easy rotating operation of the diaphragm operation ring 208 in which the index 303 moves across a boundary between the camera-side control region 311 and the lens-side control region 312. For example, a lock lever (not shown) may be provided to enable a rotating operation in which the index 303 moves across the boundary between the camera-side control region 311 and the lens-side control region 312 only when the lock lever is unlocked.

In another aspect, the rotating operation in which the index 303 moves across the boundary between the camera-side control region 311 and the lens-side control region 312 may be enabled only when a torque equal to or more than a certain torque is applied. The system controller 50 stores the image capturing setting value (a second image capturing setting value) of the camera side in the system memory 218 (storage device). When a rotating operation of the diaphragm operation ring 208 is performed in the camera-side control region 311, the system controller 50 reads a previous aperture value (a predetermined initial value for first time) from the system memory 218 and transmits the information via the communication terminal 206. Thereafter, the user controls the aperture value by operating the touch panel 109, the four-direction key 110, or the like while viewing the brightness of the live view image and the information on the OSD (on-screen display) superimposed on the live view image. Thus, the aperture value control is performed by the camera side (the aperture value change control when the control source is the camera side).

In the meantime, FIG. 3B is a view showing an example of the separate type lens unit 302. Hereinafter, the differences from the integrated type lens unit 301 described above will be described. Although the control source changeover switch 207 is integrated with the diaphragm operation ring 208 in the integrated type lens unit 301, they are separately disposed in the separate type lens unit 302. In the example in FIG. 3B, the control source changeover switch 207 is provided at the rear part of the lens housing. Symbols "M" and "A" of the control source changeover switch 207 indicate Manual and Auto, respectively. When the control source changeover switch 207 is at the "M" side, the control source is the lens side, and the aperture value can be controlled and changed by the operation of the diaphragm operation ring 208. In the meantime, when the control source changeover switch 207 is at the "A" side, the control source is the camera side (camera body side), and the aperture value can be controlled and changed by a touch operation or the like of the user on the touch panel 109.

The rotation range pointed to by the index 303 of the diaphragm operation ring 208 in the separate type lens unit 302 includes only the lens-side control region 312 in which the F numbers are printed. In the above description, the lens unit including the control source changeover switch 207 is given as an example of the separate type lens unit 302, but a physical switch is dispensable. The effect of the embodiment is not changed even when the control source is switched by the camera side.

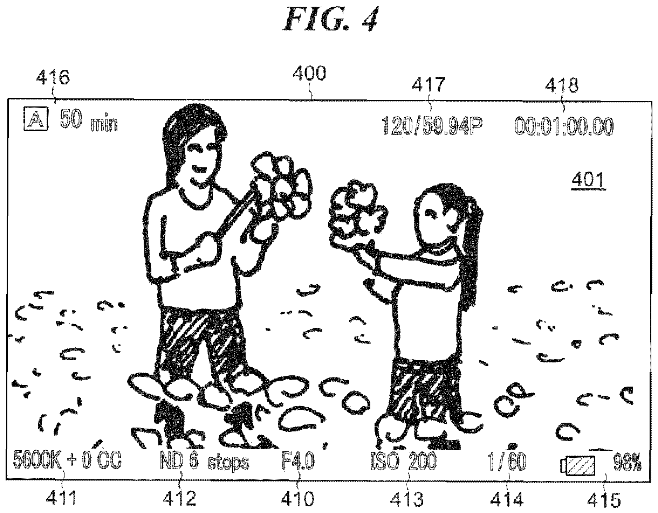

FIG. 4 is a view showing a live view image 400 according to an image capturing setting. The live view image 400 includes a captured image 401 captured by the image sensor 211, an aperture value information item 410, and various captured image information items 411 to 418. The various image capturing information items are a WB item 411, an ND item 412, an ISO item 413, a shutter item 414, and a power item 415. In addition, there are other items: a media information item 416, a frame rate item 417, and a time code item 418. The user sets the aperture value by rotationally operating the diaphragm operation ring 208 while checking the live view image 400 when the lens side is the control source. In the meantime, when the camera side is the control source, the aperture value is set by operating the touch panel 109, the four-direction key 110, or the like.

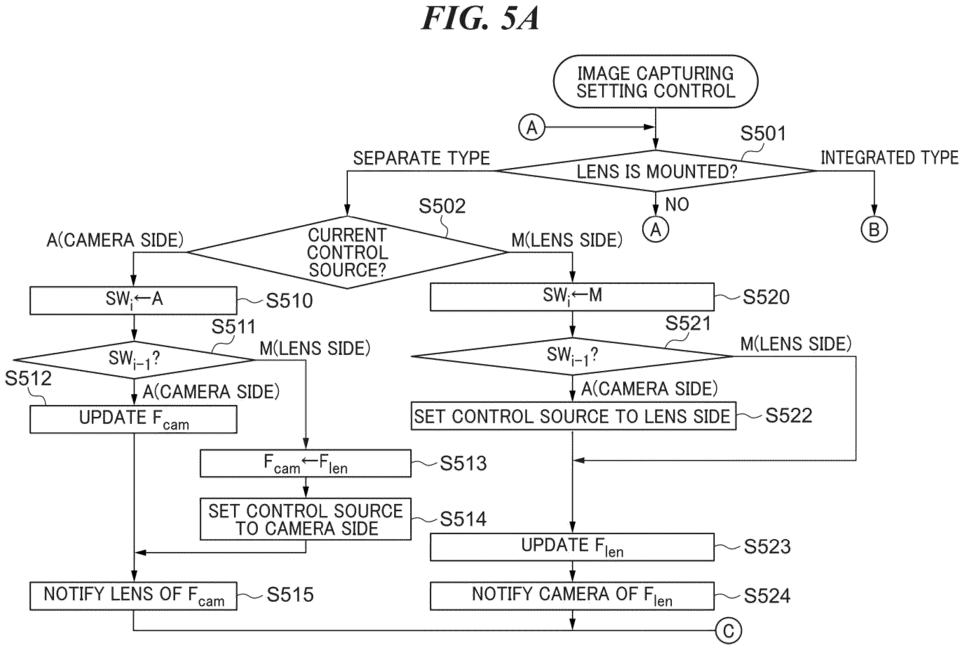

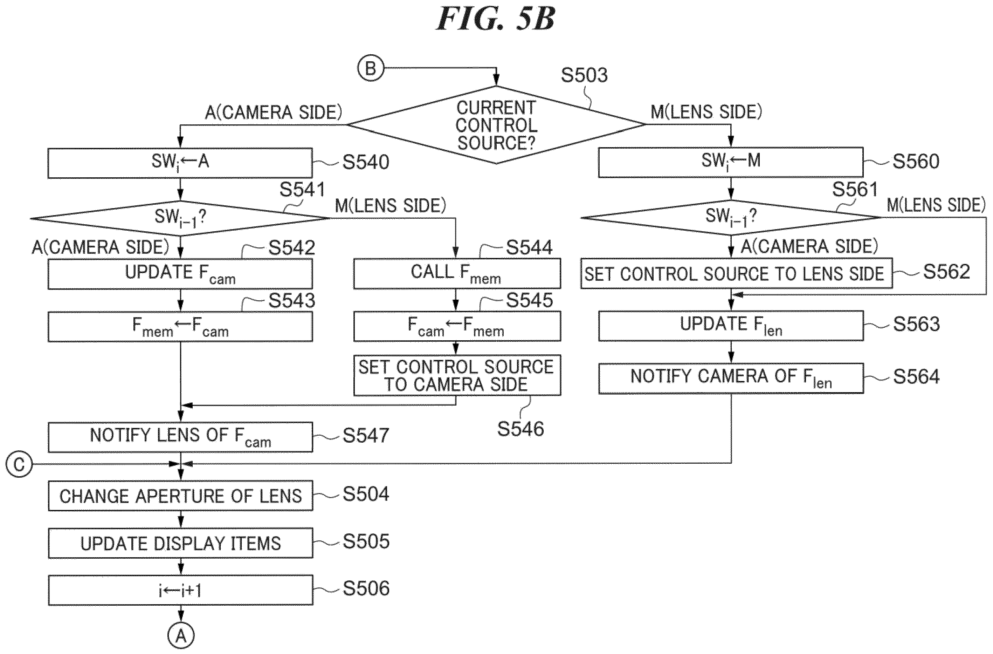

Next, the image capturing setting control in this embodiment will be described with reference to FIGS. 5A and 5B. FIGS. 5A and 5B are flowcharts showing an image capturing setting process. An aperture setting will be described as an example of the image capturing setting process. The series of processes shown in FIGS. 5A and 5B are repeatedly executed, for example, at a processing cycle of the system controller 50. However, the process is not limited to this configuration, and an asynchronous process may be executed with a related event related to the image capturing setting process as a trigger. Further, the process shown in FIGS. 5A and 5B is not necessarily executed all the time. For example, this process may be executed when the camera 100 becomes the image capturing mode, or when the camera 100 can communicate with the lens unit 200, or various other modifications may be made. Hereinafter, a subscript "i" in FIGS. 5A and 5B indicates the number of times of the process (program step number) shown in FIGS. 5A and 5B after the camera 100 is activated.

First, a process for the separate-type lens unit in FIG. 5A will be described. In S501, the system controller 50 determines whether the lens unit 200 attached to the camera 100 is the integrated type lens unit 301 or the separate type lens unit 302, or whether there is no lens. As a determination method, a method using a lens identification code that enables determination of the lens type is optimum. In this example, the system controller 50 reads the identification code of the lens system 202 stored in a nonvolatile memory (not shown) in the lens unit 200, and stores the identification code in the camera 100. Note that the nonvolatile memory (not shown) may be provided in the lens system control circuit 205, for example.

The system controller 50 then stores in the nonvolatile memory 219 the integrated/separated information (lens type information) indicating the integrated/-separated type corresponding to the lens identification code. The lens type information is, for example, one-bit information, and " 1" indicates the integrated type and "0" indicates the separated type. When the system controller 50 communicates with the lens system control circuit 205 in the lens unit 200 and obtains the identification code, the system controller 50 can determine whether the lens unit is the integrated type or the separate type by referring to the integrated/separate information (lens type information). The system controller 50 can also refer to and grasp the contents stored in the nonvolatile memory 219.

This allows to determine whether the lens unit is the integrated type lens unit 301 or the separate type lens unit 302. As another aspect, the information about whether the lens unit is the integrated type may be defined in advance by a lens communication protocol, and the system controller 50 may be notified of the defined information. When determining that the mounted lens unit is the integrated type lens unit 301 in S501, the system controller 50 proceeds with the process to S503. In the meantime, when determining that the mounted lens unit is the separate type lens unit 302, the system controller 50 proceeds with the process to S502.

In S502, the system controller 50 determines the current control source. The system controller 50 determines the control source based on the information detected by the control source changeover switch 207. The system controller 50 proceeds with the process to S510 when it determines that the control source is "A" (the camera side), and proceeds with the process to S520 when it determines that the control source is "M" (the lens side).

In S510, the system controller 50 stores the control source information $SW_i$ in the current program step in the system memory 218. Here, "A" (the camera side) is stored in the system memory 218. In S511, the system controller 50 determines the control source information $SW_{i-1}$ in the previous program step stored in the system memory 218. When the control source information $SW_{i-1}$ is "A" (the camera side) (when the control source changeover switch 207 is continuously held by the camera side), the system controller 50 proceeds with the process to S512. In the meantime, when the system controller 50 determines that the control source information $SW_{i-1}$ is "M" (the lens side) (when the control source changeover switch is switched from the camera side to the lens side) in S511, the process proceeds to S513. The control source information $SW_{i-1}$ may be set to $SW_i$ only at the time of activation.

In S512, the system controller 50 updates a camera side aperture value $F_{cam}$ as the second image capturing setting value with the aperture setting information updated by the user's operation (operation of the touch panel 109, the four-direction key 110, etc.). In the meantime, the system controller 50 updates the camera side aperture value $F_{cam}$ to a lens side aperture value $F_{len}$ as a first image capturing setting value in S513. This step allows the system controller 50 to inherit the control values of the lens side.

Next, S514 is a process of setting the control source to the camera side. Specifically, the system controller 50 switches the control source to "A" (the camera side) in S514. At the same time, the lens system control circuit 205 is notified via the communication terminal 206 that the control source has been set to "A" (the camera side). The lens system control circuit 205 receives this notification and controls the diaphragm drive circuit 203 based on the instruction (the camera side aperture value $F_{cam}$) from the system controller 50. Here, the example has been described in which the control source of the lens system control circuit 205 is switched after receiving the notification indicating that the control source has been set to "A" (the camera side). However, if the control source changeover switch 207 is provided in the lens unit as is the case of the separate type lens unit 302, the control source may be switched without waiting for the notification.

A process in S515 is performed after the process in S512 or S514. In S515, the system controller 50 notifies the lens system control circuit 205 via the communication terminal 206 that the aperture value is $F_{cam}$. The lens system control circuit 205 sets the aperture control value F to $F_{cam}$. Here, when $F_{cam}$ is out of an aperture control range, the lens system control circuit 205 may employ the nearest value to $F_{cam}$ in the settable range and notify the system controller 50 of the nearest value. S504 is executed after S515.

In the meantime, the system controller 50 stores the control source information $SW_i$ in the current program step in the system memory 218 in S520. Here, "M" (the lens side) is stored. Next, the system controller 50 determines the control source information $SW_{i-1}$ in the previous program step stored in the system memory 218 in S521. When the system controller 50 determines that the control source in the previous program step is "A" (the camera side) (when the control source changeover switch 207 has switched from the camera side to the lens side), the process proceeds to S522. In the meantime, when the system controller 50 determines that the control source is the lens side is "M" (the lens side) (when the control source changeover switch 207 is continuously held by the lens side), the process proceeds to S523. Also in this case, the control source information $SW_{i-1}$ may be set to $SW_i$ only at the time of activation.

S522 is a process of setting the control source to the lens side. Specifically, the system controller 50 switches the control source of the aperture setting to "M" (the lens side) in S522. At the same time, the system controller 50 notifies the lens system control circuit 205 via the communication terminal 206 that the control source has become "M" (the lens side). The lens system control circuit 205 receives this notification and controls the diaphragm drive circuit 203 to have the value corresponding to the setting operation of the diaphragm operation ring 208. Here, for example, when the control source changeover switch 207 is provided in the lens unit as is the case of the separate type lens unit 302, the control source may be switched without waiting for the notification. Next, the lens side aperture value $F_{len}$ is updated in S523. That is, the aperture control value F is changed to the value corresponding to the setting operation of the diaphragm operation ring 208.

Then, the camera 100 is notified of the lens side aperture value $F_{len}$ in S524. Specifically, the lens system control circuit 205 notifies the system controller 50 via the communication terminal 206 that the current aperture control value is $F_{len}$. After the process in S524, the process proceeds to S504.

Next, a process for the integrated type lens unit in FIG. 5B will be described. In S503, the same determination process as in S502 is executed. That is, the system controller 50 determines the current control source in S503. Specifically, the system controller 50 determines the control source based on the state of the control source changeover switch 207. When determining that the control source is "A" (the camera side), the system controller 50 proceeds with the process to S540 (the same process as S510). In the meantime, when determining that the control source is "M" (the lens side), the system controller 50 proceeds with the process to S560 (the same process as S520).

In S541, the determination similar to S511 is made. That is, the system controller 50 determines the control source information $SW_{i-1}$ of the previous program step stored in the system memory 218. When the control source information $SW_{i-1}$ is determined as "A" (the camera side), the process proceeds to S542 (the same process as S512). When the control source information $SW_{i-1}$ is determined as "M" (the lens side), the process proceeds to S544. In other words, when the state in which the index 303 of the diaphragm operation ring 208 points to the camera-side control region 311 is continued, the process proceeds to S542. When the state in which the index 303 points to the lens-side control region 312 is changed to the state in which the index 303 points to the camera-side control region 311, the process proceeds to S544.

In S543 performed after S542, the system controller 50 stores $F_{cam}$ in the system memory 218. The system controller 50 can call a stored value ($F_{mem}$ as the image capturing setting value stored in the system memory 218) as appropriate. $F_{mem}$ is appropriately initialized at the time of the camera activation, and as an example, the initial value of $F_{cam}$ is set. Then, the process proceeds to S547.

In the meantime, the system controller 50 calls $F_{mem}$ from the system memory 218 in S544. Then, the system controller 50 updates the value of $F_{cam}$ with the value of $F_{mem}$ in S545. A process in S546 performed next is the same as the process in S514. That is, the system controller 50 switches the control source to "A" (the camera side) in S546. At the same time, the lens system control circuit 205 is notified via the communication terminal 206 that the control source has been set to "A" (the camera side). Then, the process proceeds to S547.

A process identical to the process in S515 is performed in S547. The process in S547 is executed after the process in S543 or S546. In S547, the system controller 50 notifies the lens system control circuit 205 via the communication terminal 206 that the aperture value is $F_{cam}$. Then, the process proceeds to S504.

In the meantime, the same determination process as S521 is performed in S561 after S560. In S561, the system controller 50 determines the control source information $SW_{i-1}$ in the previous program step stored in the system memory 218. When the control source infor-

mation $SW_{i-1}$ is determined as "A" (the camera side) (when the control source changeover switch 207 has switched from the lens side to the camera side), the system controller 50 proceeds with the process to S562. In the meantime, when the control source information $SW_{i-1}$ is determined as "M" (the lens side) (when the control source changeover switch 207 is continuously held by the lens side), the system controller 50 proceeds with the process to S563 (the same process as S523).

That is, when the control source information SWi-1 in the previous program step is determined as "A" (the camera side), the process proceeds to S562 (the same process as S522). When the control source information SWi-1 in the previous program step is determined as "M" (the lens side), a process in S563 (the same process as S523) is executed. Thereafter, a process in S564 (the same processing as S524) is further executed, and the process proceeds to S504.

Then, in S504, the lens system control circuit 205 drives the diaphragm drive circuit 203 to control the diaphragm 201 to be the aperture control value F. In this embodiment, after the control is completed, the lens system control circuit 205 notifies the system controller 50 of the aperture value after the aperture control is executed. Next, after receiving the notification, the system controller 50 updates the captured image 401 and the aperture value information item 410 on the OSD (on-screen display) superimposed on the live view image displayed on the upper-face display unit 107 and the back-face display unit 108 based on the notified aperture value in S505.

Then, the system controller 50 increments the program step number "i" by one in S506. Here, when the system memory 218 is used as a ring buffer in the process according to this embodiment, the program step number may be renumbered corresponding to a buffer upper limit value. If the program step number is renumbered, the process proceeds to S501 again after executing this step.

According to this embodiment, when the control source is switched from the lens side to the camera side with using the integrated type lens unit 301, the aperture value is not set to the value at the end of the lens-side control region 312 of the diaphragm operation ring 208. Therefore, the aperture control is performed with the value stored as $F_{mem}$ (specifically, stored in the system memory 218), which is the previous setting value by the camera side. Accordingly, the time and effort required for setting the aperture at the time of switching is reduced.

According to this embodiment, a user switches the control source between the lens side and the camera side (camera body side) by switching the control source changeover switch 207. When the control source is the lens side, a first controller changes and controls the aperture value in response to the rotating operation of the diaphragm operation ring 208. When the control source is the camera body side, a second controller changes and controls the aperture value in response to a touch operation on the touch panel 109. The system memory 218 stores the aperture value (the second image capturing setting value) changed and controlled by the camera body side. When the control source is switched to the camera body side with using the integrated type lens unit 301 in which the diaphragm operation ring 208 and the control source changeover switch 207 are integrated, the processes in S544, S545, S546, etc. are executed. That is, the system controller 50 calls the aperture value ($F_{mem}$: the second image capturing setting value) stored in the system memory 218, sets $F_{cam}$ to $F_{mem}$, and controls the aperture value by the camera side. Then, the system controller 50 notifies the lens unit 200 that the control source has been switched to "A" (the camera side).

In this way, when the integrated type lens unit 301 is used, the aperture value is changed in switching the control source to the camera side. Therefore, the aperture value stored in the system memory 218 (storage device) in the nearest past (latest) is read as the aperture value by the camera side (the second image capturing setting value), and the read aperture value is subjected to the change control. As a result, even if the control source is switched from the lens side to the camera side, it is unnecessary to set the aperture value again from the beginning. The aperture value stored in the nearest past is the latest aperture value that has been changed and controlled by the camera body side when the change control of the aperture value is performed by the camera side, and is stored in the system memory 218.

In the meantime, when the control source is switched to the camera body side with using the separate type lens unit 302 in which the diaphragm operation ring 208 and the control source changeover switch 207 are not integrated, the processes in S512, S513, S514, etc. are executed. That is, the system controller 50 updates the second image capturing setting value ($F_{cam}$) by the camera body side with the first image capturing setting value ($F_{len}$) that is the latest image capturing setting value at the time of the change control by the diaphragm operation ring 208. The system controller 50 (the camera body side) then notifies the lens unit 200 to control the updated image capturing setting value.

As described above, the separate type lens unit 302 is provided with the control source changeover switch 207 at the position of the lens housing different from the diaphragm operation ring 208, and the control source is switched by the operation of the control source changeover switch 207. Moreover, the aperture value is not changed by this switching operation. Therefore, when the control source is switched from the lens side to the camera body side, the aperture value that has been subjected to the change control by the lens side up to now can be used as the target of the change control of the aperture value by the camera body side as-is.

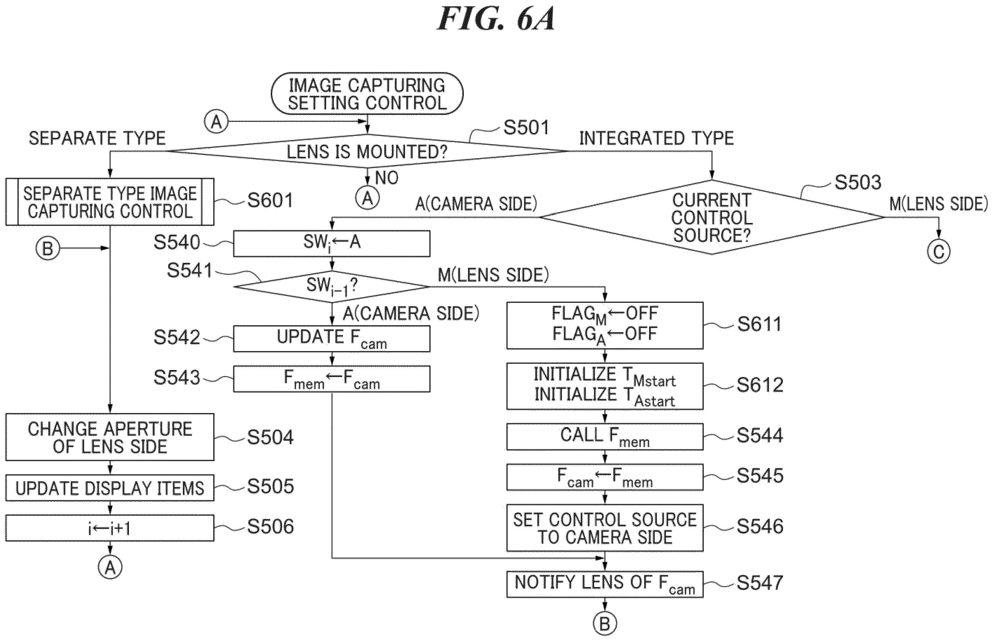

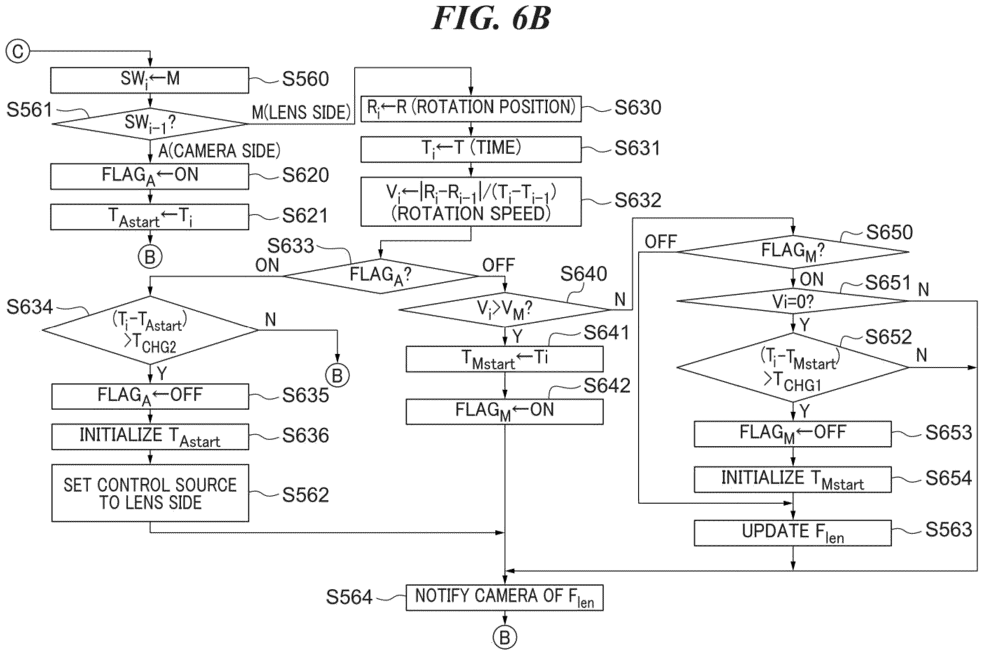

Next, a process of preventing a rapid change in the aperture value in switching the control source according to a second embodiment will be described. When the camera-side control region 311 is disposed on the small aperture side of the integrated type lens unit, an image becomes dark or contrast of an image is lowered in switching the control source from the lens side to the camera side. Therefore, the user who watches the image may have a burden on eyes, and a moving object tracking function may be degraded. In the first embodiment, the example is shown in which the time and effort for resetting the aperture value after switching the control source can be reduced. In the second embodiment, an example of preventing a rapid change in the aperture value in switching the control source will be described by referring to FIGS. 6A and 6B. Processes identical to the above-described processes are denoted by the same reference numerals, and the redundant descriptions thereof will be omitted. Specifically, the processes in the steps S500's are equivalent to the processes in the corresponding steps in FIGS. 5A and 5B, and redundant descriptions thereof are avoided as much as possible.

A process in S601 is a subroutine of the image capturing control for the separate type lens unit. The process in S601 corresponds to the processes in S502 to S524 in FIG. 5A. The process in S611 is executed when the diaphragm operation ring 208 of the integrated type lens unit reaches the camera-side control region 311 (when the diaphragm operation ring 208 is rotated from the state where the index 303 points to the lens-side control region 312 to the state where index 303 points to the camera-side control region 311), and is executed before the process in S544 described in the first embodiment.

In S611, the system controller 50 clears a flag $FLAG_M$ indicating that it is in a first changeover period during which the control source is switched from the lens side to the camera side and a flag $FLAG_A$ indicating that it is in a second changeover period during which the control source is switched from the camera side to the lens side. The process in S611 indicates that the current time is outside the first changeover period and the second changeover period. In accordance with this, the system controller 50 also initializes start time $T_{Mstart}$ of the first changeover period and start time $T_{Astart}$ of the second changeover period in S612 to be executed thereafter.

In S620, the system controller 50 sets the flag $FLAG_A$ for determining the second changeover period to ON. The process in S620 is executed after the result of the determination in S561 described in the first embodiment branches to "A" (the camera side). The flag $FLAG_A$ keeps ON and the second changeover period is kept until the flag $FLAG_A$ is turned OFF in S635.

In S621, the system controller 50 stores the time $T_i$ obtained from the system timer 220 to the start time $T_{Astart}$ of the second changeover period. The start time $T_{Astart}$ is held until satisfying a condition that a result of a determination in S634 executed after the predetermined time period lapse becomes "Y" or a condition that the diaphragm operation ring 208 is operated so that the index 303 points to the camera-side control region 311 again.

A process in S630 is executed after the result of the determination in S561 described in the first embodiment branches to "M" (the lens side). Here, the system controller 50 executes a process to store the rotational position (Ri) of the diaphragm operation ring 208 in the system memory 218. As the information to be stored, a value of an encoder or an aperture value is a preferable example. When the aperture value is stored, information that links the lens identification code and lens outer diameter information is stored in the nonvolatile memory 219, and the system controller 50 can refer to the information to convert to the rotational position.

The system controller 50 obtains time information $T_i$ in S631. Next, the system controller 50 calculates a rotation speed as a rotation amount variation in S632. The system controller 50 calculates the rotation speed $V_i$ by the following equation using the rotation amount $R_{i-1}$ and the time information $T_{i-1}$ in the previous program step and the current rotation amount $R_i$ and the time information $T_i$.

$$V_i = |R_i - R_{i-1}|/(T_i - T_{i-1})$$

However, the disclosed aspect is not limited to this, and an acceleration, a moving average speed of the vicinity, or the like may be calculated as the rotation amount variation.

The system controller 50 determines whether the flag $FLAG_A$ for the second changeover period determination is ON or OFF in S633. When the system controller 50 determines that the flag $FLAG_A$ is ON, the process proceeds to S634. When the system controller 50 determines that the flag $FLAG_A$ is OFF, the process proceeds to S640.

The system controller 50 performs a process of determining whether it is during the second changeover period in S634. Specifically, the system controller 50 determines whether an elapsed time from the start time of the second changeover period to the current time ($T_i - T_{Astart}$) exceeds a determination threshold $T_{CHG2}$ of the second changeover period. The determination threshold $T_{CHG2}$ may be set as appropriate. The appropriate value may be a half of average time required to rotate the diaphragm operation ring 208 from end to end by a user or may be a fixed value (0.3 seconds, for example). In order to further improve operability, a setting screen may be provided to allow the user to set the determination threshold $T_{CHG2}$ When the condition in S634 is satisfied, the system controller 50 regards that the second changeover period has ended and executes the processes (S635, S636, S562, and S564) of switching the control source from the camera side to the lens side.

In this way, the system controller 50 determines whether the predetermined time has elapsed since the diaphragm operation ring 208 is rotated from the camera-side control region 311 to the lens-side control region 312 (i.e., since the diaphragm operation ring 208 is rotated from the state where the index 303 points to the camera-side control region 311 to the state where the index 303 points to the lens-side control region 312). When the system controller 50 determines that the predetermined time has elapsed, the control source changeover switch 207 switches the control source from the camera body side (the system controller 50 as the second controller) to the lens side (the lens system control circuit 205 as the first controller).

The system controller 50 performs a process to turn the flag $FLAG_A$ OFF in S635. Thus, the camera 100 enters the state outside the second changeover period. In accordance with this, the system controller 50 initializes $T_{Astart}$ in S636. Subsequent processes in S562 and S564 are the same as the processes described by referring to FIG. 5B.

Next, the system controller 50 determines whether the rotation speed $V_i$ exceeds a reference speed $V_M$ that is a rotation amount variation of the diaphragm operation ring 208 as a first threshold. When the condition is satisfied (Y), the system controller 50 proceeds with the process to S641. In the meantime, when the condition is not satisfied (N), the system controller 50 proceeds with the process to S650. The reference speed $V_M$ may be calculated from ratio between the average time required to rotate the diaphragm operation ring 208 from end to end by a user and the rotation amount, or may be set by a user on a provided setting screen.

The system controller 50 updates the start time $T_{Mstart}$ of the first changeover period with the current time $T_i$ in S641. In a process in S642 executed thereafter, the system controller 50 turns the flag $FLAG_M$, which indicates that it is during the first changeover period, ON. This state continues until the diaphragm operation ring 208 reaches the camera-side control region 311 and then the flag FLAGM is turned OFF in S611.

As described above, the system controller 50 (a first determination unit) determines whether the rotation amount variation (rotation speed) exceeds the first threshold (S640). When it is determined that the rotation speed exceeds the first threshold (Y), the start time of the first changeover period of the diaphragm operation ring 208 is set to the current time (S641). Then, the flag $FLAG_M$ indicating that it is during the first changeover period of the diaphragm operation ring 208 is turned ON (S642).

In the meantime, the system controller 50 determines whether it is during the first changeover period based on ON/OFF of the flag $FLAG_M$ in S650. When determining that it is during the first changeover period (ON), the system controller 50 executes a process in S615. When determining that it is not during the first changeover period (OFF), the process proceeds to S563.

The system controller 50 determines whether the rotation speed $V_i$ is "0" in S651. That is, the system controller 50 determines whether the diaphragm operation ring 208 is stopped. When determining that the diaphragm operation ring 208 is stopped (Y), the system controller 50 proceeds with the process to S652. When it is determined that the diaphragm operation ring 208 is not stopped (N), the process proceeds to S564.

The system controller 50 determines elapsed time from the start time of the first changeover period to the current time in S652. Specifically, the system controller 50 determines whether the elapsed time from the start time of the first changeover period to the current time $(T_i - T_{Mstart})$ exceeds a determination threshold $T_{CHG1}$ of the first changeover period. When determining that the elapsed time $(T_i - T_{Mstart})$ exceeds the determination threshold $T_{CHG1}$ (Y), the system controller 50 regards that the changeover period ends and executes the processes (S653, S654, and S563) to switch the control source from the camera side to the lens side. Otherwise (N), the system controller 50 does not update the aperture value and proceeds with the process to S564.

The system controller 50 turns the flag $FLAG_M$ OFF in S653. Thus, the state of the camera 100 is set to be outside the first changeover period. In accordance with this, the system controller 50 initializes $T_{Mstart}$ in S654. After the series of processes from S503 described above are executed, the process proceeds to S504 and the following processes described in the first embodiment (see a connector "B" at the upper left part in FIG. 6A).

According to this embodiment, the change in the aperture value during the period to switch the control source from the lens side to the camera side or during the period to switch the control source from the camera side to the lens side can be reduced.

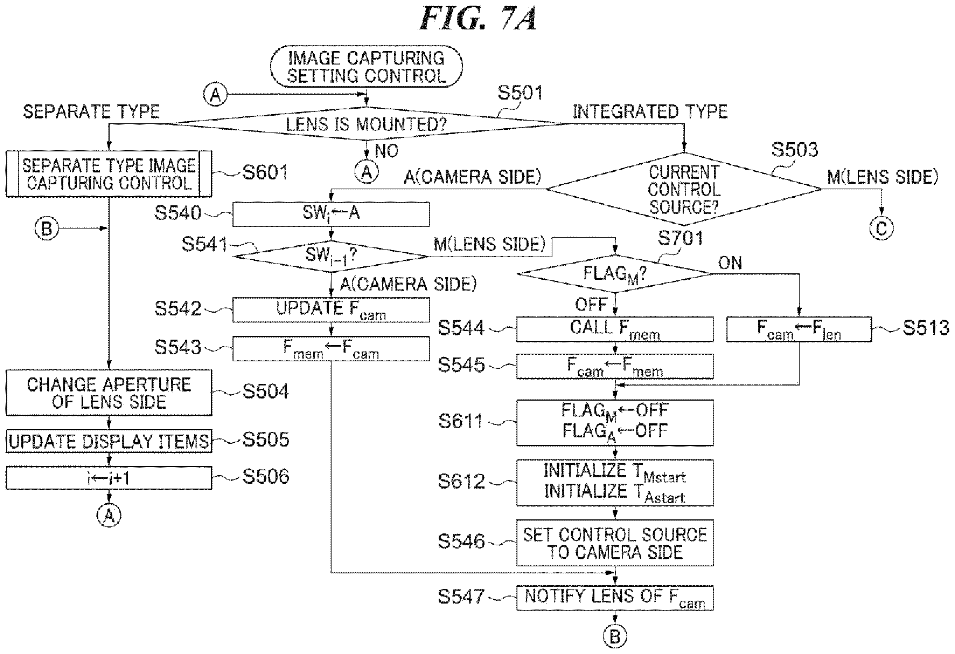

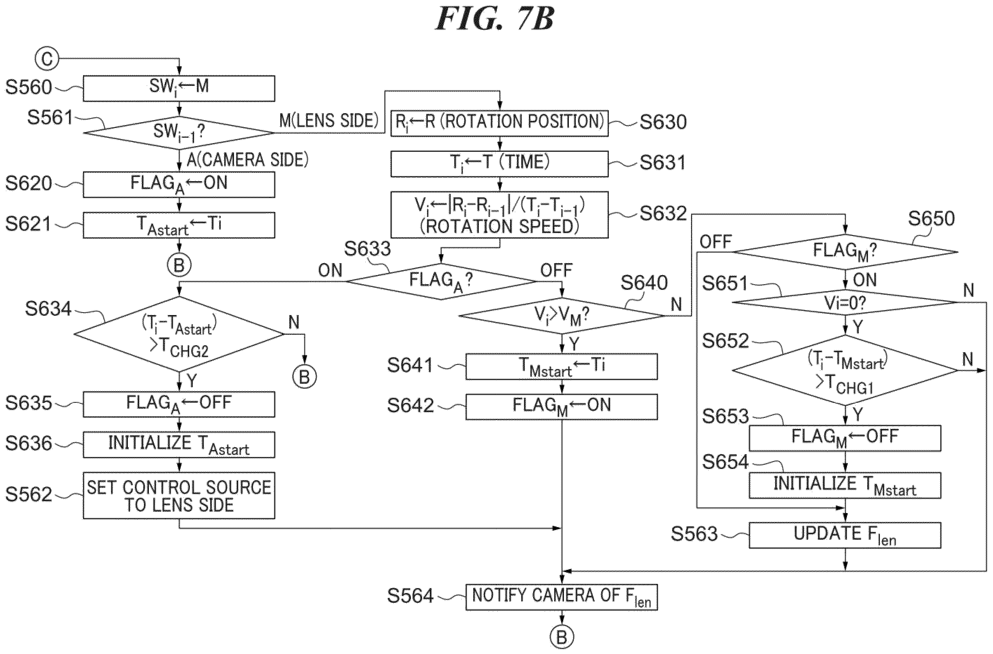

Next, a partially alternative example of the second embodiment will be described with reference to FIGS. 7A and 7B. In FIGS. 7A and 7B, the processes in the steps S500's are basically equivalent to the processes in the corresponding steps in FIGS. 5A and 5B, and the processes in the steps S600's are basically equivalent to the processes in the corresponding steps in FIGS. 6A and 6B, and therefore, redundant descriptions thereof will be omitted.

The alternative example is characterized in that a determination process of S701 is added to the process executed when the determination result in S541 is M (the lens side). When the diaphragm operation ring 208 is rotated to the camera-side control region 311 from the lens-side control region 312 (i.e., is rotated to the state where the index 303 points to the camera-side control region 311 from the state where the index 303 points to the lens-side control region 312), the system controller 50 determines whether it is during the first changeover period based on ON/OFF of the flag $FLAG_M$. When determining that it is during the first changeover period (ON), the system controller 50 executes the process in S513 and the aperture value controlled by the lens side immediately before is taken over.

When it is determined that it is not during the first changeover period (OFF), the system controller 50 executes the processes in S544 and S545 to call the stored

$F_{mem}$ and perform the process of taking over the aperture value controlled by the camera side (substituting $F_{mem}$ in $F_{cam}$). According to this alternative example, even when the integrated type lens unit 301 is used, the control source can be switched from the lens side to the camera side as with the case where the separate type lens unit 302 is used. As a result, it is possible to reduce the difference in the operation feeling of the user which is different for each lens.

According to the alternative example of the second embodiment, it is possible to determine whether it is during the first changeover period, determine whether the diaphragm operation ring 208 is being driven, determine whether it is during the second changeover period, and the like. As a result, the timings of switching the control source and updating the aperture value can be controlled as appropriate. The present disclosure is not limited to the embodiments described above, and various modifications and changes can be made.

Next, a first variation example of the above embodiment will be described. In the first variation example, the system controller 50 (first determination unit) determines whether it is in a changeover period during which a changeover operation by the diaphragm operation ring 208 (rotating member) of the integrated type lens unit 301 is performing and whether it is after the changeover period, since the start time at which the rotation amount variation of the diaphragm operation ring 208 exceeds the first threshold. That is, the system controller 50 determines whether it is in the changeover period of the diaphragm operation ring 208 and whether it is after the changeover period of the diaphragm operation ring 208, four ways in total. When the system controller 50 (first determination unit) determines that it is after the changeover period of the diaphragm operation ring 208, the lens side does not change and control the aperture value (i.e., the first controller does not change and control the image capturing setting value). In the meantime, when it is determined that it is in the changeover period of the diaphragm operation ring 208, the body side may change and control the aperture value (image capturing setting value) to the value at the start time (i.e., the second controller may change and control the image capturing setting value to the value at the start time).

According to this, when the system controller 50 determines that it is in the changeover period of the diaphragm operation ring 208 (rotating member), the lens side does not change and control the aperture value or the like. This prevents the aperture value control from being performed in an unstable state such as in the changeover period. In the meantime, when the system controller 50 determines that it is after the changeover period of the diaphragm operation ring 208, there is a high possibility that the rotating operation of the diaphragm operation ring 208 is not performed any more. Therefore, the aperture value can be controlled and changed to the value at the start time by the camera body side in a stable state.

Next, a second variation example of the above embodiment will be described. In the second variation example, the system controller 50 (a second determination unit) determines whether predetermined time has lapsed after the diaphragm operation ring 208 (rotating member) of the integrated type lens unit 301 has been rotated from the camera side control area 311 to the lens-side control region 312 (i.e., from the state where the index 303 points to the camera side control area 311 to the state where the index 303 points to the lens-side control region 312). Alternatively, the system controller 50 (first determination unit) may be configured not to control and change the aperture value (image capturing setting value) by the body side (not to operate the second controller) when determining that it is in the changeover period of the diaphragm operation ring 208.

Even in this case, when it is determined that the diaphragm operation ring 208 (rotating member) is during the changeover period, the diaphragm operation ring 208 may be further rotationally operated. Therefore, the aperture value is not controlled and changed by the camera body side. This can prevent the aperture value from being controlled in an unstable state.

In the first embodiment and the second embodiment, the aperture value has been described as an example of the image capturing setting values, but the present disclosure is not limited thereto. For example, the present disclosure is applicable to focus adjustment. In such a case, the same effect can be obtained by replacing the aperture value as the image capturing setting value with a focus value, the diaphragm operation ring 208 with the focus adjustment ring 209, and the diaphragm drive circuit 203 with the AF drive circuit 204.

The present disclosure also applicable to a custom ring provided in a lens unit to which an arbitrary image capturing setting value can be assigned. For example, the image capturing setting value may be a shutter speed, an ISO speed, an optical density of a variable ND filter, etc. At the time of assignment, the camera-side control region 311 and the lens-side control region 312 are formed in a movable range of the custom ring. The custom ring preferably has physical ends or electronical ends. The present disclosure is applicable to the custom ring by the same replacement as the focus adjustment described above. In this way, the lens unit 200 includes an assign operation unit to which a predetermined function can be assigned by the camera 100 (body), and the image capturing setting value such as the aperture value can be selected by the camera 100.

A program code supplied and installed to a computer to execute the process and function of the present disclosure by the computer also constitutes the present disclosure. That is, the computer program for executing the function and process of the present disclosure also constitutes the present disclosure. In this case, the program may be in any form, such as an object code, a program executed by an interpreter, or script data supplied to an OS, as long as the program can be executed by the computer.

A recording medium for supplying the program may be a magnetic recording medium such as a hard disk or a magnetic tape, an optical/magnetooptical storage medium, and a nonvolatile semiconductor memory, but is not limited thereto. The program may be supplied in various methods. A method that a client computer downloads and uses a computer program of the present disclosure stored in a server on a network is considerable.

Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1. An image capturing apparatus comprising:

   a lens unit (200) including a lens system (202);

   a camera body (100) to which the lens unit (200) is attachable;
   an operation member (208) provided in the lens unit (200);
   a first controller (205) configured to control and change an image capturing setting value by a lens unit side according to an operation of the operation member (208);
   a second controller (50) configured to control and change the image capturing setting value by a camera body side; and
   a control source changeover unit (207) configured to switch a control source between the lens unit side and the camera body side;
   a storage device (218) configured to store the image capturing setting value changed and controlled by the second controller (50) as a second image capturing setting value,
   wherein, in an integrated configuration in which the operation member (208) and the control source changeover unit (207) are integrated, when the control source changeover unit (207) switches the control source to the camera body side, the second controller (50) changes and controls the second image capturing setting value stored in the storage device (218), and the camera body (100) notifies the lens unit (200) that the camera body side is the control source, and
   wherein, in a separate configuration in which the operation member (208) and the control source changeover unit (207) are separated, when the control source changeover unit (207) switches the control source to the camera body side, the second controller (50) further updates the second image capturing setting value with a first image capturing setting value that is a latest image capturing setting value changed and controlled by the first controller (205), and the camera body (100) notifies the lens unit (200) that the camera body (100) controls the updated image capturing setting value.

2. The image capturing apparatus according to claim 1, wherein, in the integrated configuration, the operation member is a rotating member (208) of which a rotation axis coincides with an optical axis of the lens system (202), and a part of a rotation range (313) of the rotating member (208) is a lens-side control region (312) for changing and controlling the image capturing setting value by the first controller (205) according to rotation of the rotating member (208), and another part of the rotation range (313), which is a region extended from the lens-side control region (312) in the rotating direction, incudes a camera-side control region (311) for changing and controlling the image capturing setting value by the second controller (50), and

wherein the control source changeover unit (207) switches the control source according to rotation of the rotating member (208) between the lens-side control region (312) and the camera-side control region (311).

3. The image capturing apparatus according to claim 2, further comprising a first determination unit (50, S640) configured to determine whether a rotation amount variation of the rotating member (208) exceeds a first threshold,
wherein, in a case where the first determination unit (50, S640) determines that the rotation amount variation exceeds the first threshold, start time of a changeover period in which a changeover operation is performed by the rotating member (208) is set as current time (S641) and it is determined that there is in the changeover period (S642).

4. The image capturing apparatus according to claim 2, further comprising a first determination unit (50) configured to determine whether it is in a changeover period during which a changeover operation by the rotating member (208) is performing and whether it is after the changeover period, since the start time at which the rotation amount variation of the rotating member (208) exceeds a first threshold,
wherein the first controller (205) does not change and control the image capturing setting value in a case where the first determination unit (50) determines that it is in the changeover period, and the second controller (50) changes and controls the image capturing setting value to the image capturing setting value at the start time in a case where the first determination unit (50) determines that it is after the changeover period.

5. The image capturing apparatus according to claim 3, further comprising a second determination unit (50) configured to determine whether predetermined time elapses after the rotating member (208) rotates from the camera-side control region (312) to the lens-side control region (311),
wherein the control source changeover unit (207) switches the control source from the camera body side to the lens unit side in a case where the second determination unit (50) determines that the predetermined time elapses.

6. The image capturing apparatus according to claim 4, further comprising a second determination unit (50) configured to determine whether predetermined time elapses after the rotating member (208) rotates from the camera-side control region (312) to the lens-side control region (311),
wherein the first controller (205) does not change and control the image capturing setting value in the case where the second determination unit (50) determines that the predetermined time does not elapse.

7. The image capturing apparatus according to claim 1, wherein the camera body (100) obtains information including lens identification information for identifying lens information about the lens system (202) and lens type information indicating whether the control source changeover unit (207) is integrally configured.

8. The image capturing apparatus according to any one of claims 1 to 3, wherein the image capturing setting value is an aperture value.

9. The image capturing apparatus according to any one of claims 1 to 3, wherein the image capturing setting value of is a focus value.

10. The image capturing apparatus according to any one of claims 1 to 3, wherein the lens unit (200) further includes an assign operation unit to which a predetermined function can be assigned and operated from the camera body (100), and the image capturing setting value can be selected from the camera body (100).

11. A control method for an image capturing apparatus including a lens unit (200), a camera body (100) to which the lens unit (200) is attachable, an operation member (208) provided in the lens unit (200), and a control source changeover unit (207) switching a control source, the control method comprising:

a first control step, executed in a case where the control source is a lens unit side, of performing change control of an image capturing setting value by the lens unit side according to an operation of the operation member (208);
a second control step, executed in a case where the control source is a camera body side, of performing change control of the image capturing setting value by the camera body side;
a control source changeover step of switching a control source between the lens unit side and the camera body side with the control source changeover unit (207); and
a storing step of storing the image capturing setting value changed and controlled in the second control step as a second image capturing setting value,
wherein, in an integrated configuration in which the operation member (208) and the control source changeover unit (207) are integrated, when the control source changeover unit (207) switches the control source to the camera body side, the second image capturing setting value stored in the storing step is changed and controlled in the second control step, and the camera body (100) notifies the lens unit (200) that the camera body (100) is the control source, and

wherein, in a separate configuration in which the operation member (208) and the control source changeover unit (207) are separated, when the control source changeover unit (207) switches the control source to the camera body side, the second image capturing setting value is updated in the second control step with a first image capturing setting value that is a latest image capturing setting value changed and controlled in the first control step, and the camera body (100) notifies the lens unit (200) that the camera body (100) controls the updated image capturing setting value.

12. A program product for causing a computer to execute the control method for the image capturing apparatus according to claim 11.

## FIG. 1A

# FIG. 1B

# FIG. 2

# FIG. 3A

FIG. 3B

# FIG. 4

## FIG. 5A

IMAGE CAPTURING SETTING CONTROL

(A) →

LENS IS MOUNTED? — S501

SEPARATE TYPE ←

INTEGRATED TYPE →

NO → (A)

→ (B)

**A(CAMERA SIDE)** ← CURRENT CONTROL SOURCE? — S502 → **M(LENS SIDE)**

$SW_i \leftarrow A$ — S510

$SW_i \leftarrow M$ — S520

$SW_{i-1}$? — S511 → **M(LENS SIDE)**

$SW_{i-1}$? — S521 → **M(LENS SIDE)**

S512 → UPDATE $F_{cam}$  — A(CAMERA SIDE)

A(CAMERA SIDE) → SET CONTROL SOURCE TO LENS SIDE — S522

$F_{cam} \leftarrow F_{len}$ — S513

SET CONTROL SOURCE TO CAMERA SIDE — S514

UPDATE $F_{len}$ — S523

NOTIFY LENS OF $F_{cam}$ — S515

NOTIFY CAMERA OF $F_{len}$ — S524

→ (C)

## FIG. 5B

B → S503 CURRENT CONTROL SOURCE?

A(CAMERA SIDE) → SW$_i$←A — S540

M(LENS SIDE) → SW$_i$←M — S560

S541 SW$_{i-1}$? M(LENS SIDE)

A(CAMERA SIDE) → UPDATE F$_{cam}$ — S542

CALL F$_{mem}$ — S544

S561 SW$_{i-1}$? M(LENS SIDE)

A(CAMERA SIDE) → SET CONTROL SOURCE TO LENS SIDE — S562

F$_{mem}$←F$_{cam}$ — S543

F$_{cam}$←F$_{mem}$ — S545

UPDATE F$_{len}$ — S563

SET CONTROL SOURCE TO CAMERA SIDE — S546

NOTIFY CAMERA OF F$_{len}$ — S564

NOTIFY LENS OF F$_{cam}$ — S547

C → CHANGE APERTURE OF LENS — S504

UPDATE DISPLAY ITEMS — S505

i←i+1 — S506

A

EP 4 525 475 A1

## FIG. 6A

IMAGE CAPTURING SETTING CONTROL

(A) →

SEPARATE TYPE ← S501 LENS IS MOUNTED? → INTEGRATED TYPE

| SEPARATE TYPE IMAGE CAPTURING CONTROL | ~ S601

NO
(A)

CURRENT CONTROL SOURCE? ⟋ S503

A(CAMERA SIDE) ← → M(LENS SIDE) → (C)

(B) →

S540 ⟋ $SW_i \leftarrow A$

S541 ⟋ $SW_{i-1}$? → M(LENS SIDE) →

A(CAMERA SIDE)

S542 ⟋ UPDATE $F_{cam}$

S543 ⟋ $F_{mem} \leftarrow F_{cam}$

$FLAG_M \leftarrow OFF$ / $FLAG_A \leftarrow OFF$ ~ S611

INITIALIZE $T_{Mstart}$ / INITIALIZE $T_{Astart}$ ~ S612

CALL $F_{mem}$ ~ S544

$F_{cam} \leftarrow F_{mem}$ ~ S545

| CHANGE APERTURE OF LENS SIDE | ~ S504

| UPDATE DISPLAY ITEMS | ~ S505

| $i \leftarrow i+1$ | ~ S506

(A)

SET CONTROL SOURCE TO CAMERA SIDE ~ S546

NOTIFY LENS OF $F_{cam}$ ~ S547

(B)

EP 4 525 475 A1

## FIG. 6B

## FIG. 7A

IMAGE CAPTURING SETTING CONTROL

Ⓐ

S501 — LENS IS MOUNTED?

SEPARATE TYPE → SEPARATE TYPE IMAGE CAPTURING CONTROL ~ S601

NO → Ⓐ

INTEGRATED TYPE

S503 — CURRENT CONTROL SOURCE?

A(CAMERA SIDE)

M(LENS SIDE) → Ⓒ

Ⓑ

S540 — $SW_i \leftarrow A$

S541 — $SW_{i-1}$? — M(LENS SIDE)

A(CAMERA SIDE)

S542 — UPDATE $F_{cam}$

S543 — $F_{mem} \leftarrow F_{cam}$

S701 — $FLAG_M$? — ON → $F_{cam} \leftarrow F_{len}$ ~ S513

OFF

S544 — CALL $F_{mem}$

S545 — $F_{cam} \leftarrow F_{mem}$

CHANGE APERTURE OF LENS SIDE ~ S504

UPDATE DISPLAY ITEMS ~ S505

$i \leftarrow i+1$ ~ S506

Ⓐ

S611 — $FLAG_M \leftarrow OFF$ / $FLAG_A \leftarrow OFF$

S612 — INITIALIZE $T_{Mstart}$ / INITIALIZE $T_{Astart}$

S546 — SET CONTROL SOURCE TO CAMERA SIDE

S547 — NOTIFY LENS OF $F_{cam}$

Ⓑ

# FIG. 7B

EP 4 525 475 A1

Europäisches
Patentamt

European
Patent Office

Office européen
des brevets

# EUROPEAN SEARCH REPORT

Application Number

EP 24 19 4896

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2021 076807 A (CANON KK) 20 May 2021 (2021-05-20) | 1,8,11, 12 | INV. H04N23/663 |
| Y | * paragraphs [0012], [0020], [0043] - | 1,2,7-12 | G03B17/14 |
| A | [0046]; figures 1-2 * | 3-6 | H04N23/667 |
| | ----- | | |
| X | US 2018/203202 A1 (TAKESHITA YUKITAKA [JP] ET AL) 19 July 2018 (2018-07-19) | 1,2,8,9, 11,12 | |
| Y | * paragraphs [0029], [0035], [0037], | 1,2,7-12 | |
| A | [0042], [0055], [0058] - [0059], [0081]; figures 1-6 * | 3-6 | |
| | ----- | | |
| X | US 2007/003269 A1 (UEDA HIROSHI [JP] ET AL) 4 January 2007 (2007-01-04) | 1,2,7,8, 11,12 | |
| Y | * paragraphs [0032], [0054], [0061], | 1,2,7-12 | |
| A | [0066], [0080], [0125]; figures 8,9 * | 3-6 | |
| | ----- | | |
| Y | US 2012/287328 A1 (KAWAI SUMIO [JP] ET AL) 15 November 2012 (2012-11-15) * paragraph [0102]; figure 1 * | 10 | |
| | ----- | | |

**TECHNICAL FIELDS SEARCHED (IPC)**

H04N
G03D
G03B

The present search report has been drawn up for all claims

| Place of search | Date of completion of the search | Examiner |
|---|---|---|
| The Hague | 16 January 2025 | Mao, Pauline |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 4896

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2025

| Patent document cited in search report | | Publication date | Patent family member(s) | | Publication date |
|---|---|---|---|---|---|
| JP 2021076807 | A | 20-05-2021 | NONE | | |
| US 2018203202 | A1 | 19-07-2018 | CN | 108027489 A | 11-05-2018 |
| | | | JP | 6652569 B2 | 26-02-2020 |
| | | | JP | WO2017047593 A1 | 21-06-2018 |
| | | | US | 2018203202 A1 | 19-07-2018 |
| | | | WO | 2017047593 A1 | 23-03-2017 |
| US 2007003269 | A1 | 04-01-2007 | NONE | | |
| US 2012287328 | A1 | 15-11-2012 | US | RE45856 E | 19-01-2016 |
| | | | US | RE46385 E | 02-05-2017 |
| | | | US | 2012287328 A1 | 15-11-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2021076807 A